# FASCICULE DE BREVET EUROPEEN

(11) **EP 3 103 102 B1**
(45) Date de publication et mention de la délivrance du brevet: **29.08.2018**
(21) Numéro de dépôt: 15700756.8
(22) Date de dépôt: 22.01.2015
(51) Int. Cl.: G06T 7/277

(54) **PROCÉDÉ DE DÉTECTION ET DE PISTAGE DE CIBLES**
VERFAHREN ZUR DETEKTION UND VERFOLGUNG VON ZIELEN
METHOD FOR DETECTING AND TRACKING TARGETS

(30) Priorité: 07.02.2014 FR 1400355
(43) Date de publication de la demande: 14.12.2016
(73) Titulaire: Safran Electronics & Defense, 92100 Boulogne-Billancourt (FR)
(72) Inventeur: MALTESE, Dominique, 92100 Boulogne-Billancourt (FR); HAMROUNI, Ahmed, 92100 Boulogne-Billancourt (FR)
(74) Mandataire: Cabinet Plasseraud
(86) Numéro de dépôt international: PCT/EP2015/051244
(87) Numéro de publication internationale: WO 2015/117833

(56) Documents cités:
- WO-A1-2011/114086
- PETETIN Y ET AL: "A tracker based on a CPHD filter approach for infrared applications", SIGNAL PROCESSING, SENSOR FUSION, AND TARGET RECOGNITION XX, SPIE, 1000 20TH ST. BELLINGHAM WA 98225-6705 USA, vol. 8050, no. 1, 13 mai 2011 (2011-05-13) , pages 1-12, XP060013944, DOI: 10.1117/12.883959
- Jingjing Wu ET AL: "Probability-hypothesis-density filter for multitarget visual tracking with trajectory recognition", Optical Engineering, 1 janvier 2010 (2010-01-01), page 129701, XP055144127, DOI: 10.1117/1.3518084 Extrait de l'Internet: URL:http://proceedings.spiedigitallibrary. org/data/Journals/OPTICE/22145/129701_1.pd f
- KUSHA PANTA ET AL: "An Efficient Track Management Scheme for the Gaussian-Mixture Probability Hypothesis Density Tracker", INTELLIGENT SENSING AND INFORMATION PROCESSING, 2006. ICISIP 2006. FOU RTH INTERNATIONAL CONFERENCE ON, IEEE, PI, 1 décembre 2006 (2006-12-01), pages 230-235, XP031124339, ISBN: 978-1-4244-0611-1
- MALTESE DOMINIQUE ET AL: "Naval asymetric threats and piracy acts: Study of a new IR detection module", INFORMATION FUSION (FUSION), 2012 15TH INTERNATIONAL CONFERENCE ON, IEEE, 9 juillet 2012 (2012-07-09), pages 17-23, XP032228398, ISBN: 978-1-4673-0417-7
- ZHANG H ET AL: "Gaussian mixture CPHD filter with gating technique", SIGNAL PROCESSING, ELSEVIER SCIENCE PUBLISHERS B.V. AMSTERDAM, NL, vol. 89, no. 8, 1 août 2009 (2009-08-01), pages 1521-1530, XP026045343, ISSN: 0165-1684, DOI: 10.1016/J.SIGPRO.2009.02.006 [extrait le 2009-02-20]

## Description

La présente invention concerne un procédé de détection et de pistage («search and tracking» en anglais) de cibles, ainsi qu'un système qui est adapté pour mettre en oeuvre un tel procédé.

La détection et le pistage de cibles constituent un mode de surveillance d'environnement qui est couramment utilisé, notamment dans le secteur naval. Il consiste à saisir successivement une série d'images optroniques de l'environnement, puis rechercher dans chaque image la présence potentielle de cibles, et confirmer ou infirmer une telle présence en déterminant si une répétition de détections existe pour plusieurs images successives.

Un tel mode de surveillance est souvent mis en oeuvre à partir d'images de l'environnement qui sont saisies dans une bande spectrale infrarouge. Dans ce cas, le système de détection et de pistage est usuellement désigné par IRST, pour «InfraRed Search and Track». En outre, la surveillance de l'environnement peut être panoramique. Pour cela, l'environnement peut être balayé en variant continûment la ligne de visée en azimut sur 360° (degré). Chaque passage de balayage produit alors une nouvelle image qui est aussi appelée bandeau.

Les termes suivants sont utilisés dans le domaine technique de la détection et du pistage de cibles :
- plot, ou point chaud («spot» en anglais) : endroit à l'intérieur d'une image où les intensités qui sont saisies pour certains au moins des pixels de cet endroit ont des caractéristiques qui sont différentes de l'environnement dans l'image. En particulier, les intensités des pixels d'un plot peuvent être supérieures à celles des pixels proches. Un plot peut correspondre à une cible qui est présente réellement dans le champ d'observation ou à une aberration de détection. Un plot est détecté en mettant en oeuvre un critère de détection, qui peut être établi par rapport à un niveau moyen de signal et/ou un niveau de bruit de l'image. Par exemple, le critère de détection peut requérir que la valeur d'intensité en un point de l'image, à laquelle on peut retrancher la valeur d'intensité du fond d'image au voisinage du point, soit supérieure à un seuil de détection prédéterminé. Plus généralement, la détection peut être basée sur la valeur d'un rapport signal-sur-bruit à l'endroit dans l'image où la détection d'un plot est testée ;
- probabilité de détection : probabilité pour qu'une cible qui est réellement présente dans le champ de surveillance soit détectée dans une image en tant que plot ;
- probabilité de fausse alarme : probabilité pour qu'un plot qui est détecté dans une image soit une aberration de détection, c'est-à-dire pour que ce plot ne corresponde pas à une cible qui soit réellement présente dans le champ de surveillance. Un tel plot de fausse alarme fait l'objet d'un pistage dans le procédé de surveillance, comme tout plot qui est détecté ;
- séquence de mise en piste : algorithme de pistage d'une cible sous la forme d'une chaîne spatio-temporelle de plots détectés dans plusieurs images successives, pour aboutir soit à une déclaration de la chaîne de plots comme correspondant à une cible réelle, soit à une décision selon laquelle la chaîne de plots est considérée comme une aberration de détection ;
- probabilité de mise en piste : probabilité pour qu'une cible réelle soit détectée puis déclarée à l'issue de la mise en piste ; et
- probabilité de fausse piste : probabilité pour qu'une chaîne spatio-temporelle de plots détectés soit déclarée à tort comme une cible à l'issue de la mise en piste.

De façon connue, dans un procédé de détection et de pistage de cibles, les deux phases du procédé sont enchaînées de la façon suivante : la première phase consiste en la détection de plots dans chaque image, puis la phase de mise en piste, ou pistage, est exécutée itérativement pour chaque plot qui a été détecté.

La phase de détection des plots comprend elle-même les deux étapes suivantes :
/1/ en utilisant un seuil de détection, rechercher des pixels à l'intérieur de l'image, qui possèdent chacun une valeur d'un rapport signal-sur-bruit supérieure au seuil de détection ; et
/2/ à l'intérieur d'une matrice de l'image, regrouper certains des pixels dont les valeurs du rapport signal-sur-bruit sont supérieures au seuil de détection, lorsque lesdits pixels sont proches les uns des autres dans l'image, de façon à former des plots de regroupement. Eventuellement, d'autres des pixels dont les valeurs du rapport signal-sur-bruit sont aussi supérieures au seuil de détection peuvent être supprimés si ces autres pixels sont isolés dans l'image.

Une telle phase de détection est exécutée pour chaque image individuellement au sein d'un module de traitement d'image. Elle constitue un filtrage spatial du contenu de l'image, qui est appliqué séparément des autres images.

La phase de pistage consiste à rechercher si chaque plot qui est détecté peut être chaîné spatialement à d'autres plots qui sont présents dans les images successives saisies précédemment. Pour cela, la séquence de mise en piste est testée pour tous les plots qui sont identifiés dans l'image qui est en cours de traitement, ou bien pour une sélection réduite de certains plots. Lorsqu'un plot a été détecté dans l'image en cours de traitement sans pouvoir être corrélé avec un ou plusieurs plots qui ont été détectés dans des images de la série antérieures à l'image en cours de traitement, la séquence de mise en piste est initiée pour ce nouveau plot. Mais si un plot qui est détecté dans l'image en cours de traitement peut être rattaché à une piste déjà identifiée à partir d'images de la série antérieures à l'image en cours de traitement, le pistage est continué avec la séquence de mise en piste déjà initiée. Un tel rattachement est effectué en tenant compte d'un déplacement possible de la cible entre l'image qui est en cours de traitement et la précédente. Une piste de cible est alors déclarée pour une chaîne spatio-temporelle de plots si la séquence de mise en piste est complètement satisfaite pour cette chaîne de plots.

L'algorithme de pistage d'un plot peut être constitué par une suite de rapports de détection du plot dans des images successives, appelée séquence de mise en piste. Un tel algorithme est supposé connu de l'Homme du métier, et décrit par exemple dans le document WO 02/21152. Un rapport de détection est M / N, où M et N sont deux nombres entiers positifs et non nuls, et M est inférieur ou égal à N. Le rapport de détection signifie que la chaîne de plots est présente dans M images parmi N images successives. Le rapport de détection est satisfait si la chaîne des plots est détectée dans au moins M des N images successives. La séquence de mise en piste est elle-même satisfaite si tous les rapports de détection de cette séquence sont satisfaits. Dans ce cas, la mise en piste aboutit à la déclaration de la chaîne de plots comme étant une cible. Dès qu'un des rapports de détection n'est pas satisfait, la chaîne de plots est considérée comme une aberration de détection et est écartée.

Pratiquement, l'algorithme de pistage est efficace si le nombre de plots qui sont suivis en parallèle dans des images successives n'est pas trop élevé. En effet, un nombre élevé de plots qui sont suivis simultanément peut requérir un temps de calcul incompatible avec la durée entre deux images qui sont saisies successivement, ou bien nécessiter une quantité de mémoire et une puissance de calcul qui ne sont pas disponibles dans le système utilisé pour la surveillance. Par ailleurs, un nombre élevé de plots peut faire apparaître des trajectoires de plots qui sont proches entre elles, ou qui se croisent, de sorte qu'une indétermination apparaît quant à l'attribution de portions des trajectoires à une chaîne de plots ou à une autre pour les pistages de deux chaînes de plots différentes. Pour ces raisons, le pistage des plots détectés est plus efficace lorsque le nombre de ces plots reste limité, c'est-à-dire lorsque la probabilité de fausse alarme est réduite.

Usuellement, une telle limitation du nombre des plots qui sont détectés est réalisée en ajustant, dans le sens d'une augmentation, le seuil qui est utilisé dans l'étape de détection. La probabilité de fausse alarme est diminuée, mais une telle augmentation du seuil de détection a pour conséquence de réduire la sensibilité de l'ensemble du procédé. Notamment la distance maximale d'une cible potentielle jusqu'à laquelle la détection est réellement efficace, est réduite. Cette distance maximale est appelée portée de la détection («detection haul» en anglais) dans le jargon de l'Homme du métier.

Un autre inconvénient d'augmenter le seuil de détection est le risque de ne pas détecter dans une image nouvellement traitée, une cible qui a déjà été détectée une ou plusieurs fois dans des images antérieures. Une accumulation de tels trous de détection peut aboutir à une interruption de la séquence de mise en piste de la chaîne de plots, réduisant en conséquence la probabilité de mise en piste.

Plusieurs méthodes sont déjà connues pour réduire la probabilité de fausse alarme sans réduire la portée de la détection des plots.

Un première de ces méthodes est appelée «track before detect» en anglais, ou «poursuite avant détection». Elle consiste à rechercher une confirmation dans plusieurs images successives, de certains au moins des points dont l'intensité ou le rapport signal-sur-bruit est supérieur au seuil de détection, avant de les qualifier ou non en tant que plots et d'initier un pistage pour chacun d'eux. Cette méthode est très coûteuse en mémoire et en temps de calcul car elle intervient au niveau du traitement d'image, en comparant des intensités individuelles de points d'images entre au moins deux images successives.

Une deuxième méthode connue consiste à filtrer les plots qui sont détectés en fonction d'attributs individuels de chaque plot au sein de l'image dans laquelle il est détecté pour la première fois. Par exemple, le nombre de points d'image adjacents qui constituent ensemble le plot, la forme du contour du plot, ou morphologie du plot, et son intensité radiométrique sont des attributs qui peuvent être pris en compte dans le filtrage. Le pistage n'est réalisé ensuite que pour les plots qui ont été conservés à l'issue d'un tel filtrage.

L'article intitulé «On Track-Management within PMHT Framework», de Monika Wieneke et Peter Willett, Symposium ISIF FUSION 2008, décrit une troisième méthode pour réduire la probabilité de fausse alarme, dans le cadre d'un procédé de détection et de pistage qui est «orienté mesure» («measurement-oriented» en anglais). Dans un tel procédé, un module de pistage probabiliste à hypothèses multiples, ou PMHT («Probabilistic Multiple Hypothesis Tracker»), peut traiter en parallèle plusieurs trajectoires qui sont possibles pour une cible potentielle, pendant son pistage, à partir des positions de plots qui sont identifiées dans des images successives. Dans un tel procédé de détection et de pistage, les plots qui sont détectés dans une image saisie nouvellement sont d'abord affectés autant que possible aux trajectoires déjà initiées d'après les images antérieures. Ensuite, les plots résiduels, c'est-à-dire ceux qui n'ont pas pu être ainsi affectés à une trajectoire hypothétique déjà identifiée, sont filtrés avant d'initier une nouvelle séquence de mise en piste pour chacun d'eux. Un tel filtrage est réalisé par un module supplémentaire du système de détection et de pistage de cibles, qui est appelé «GMPHD Clutter Remover», ou module de suppression de fouillis par densité de probabilité hypothétique à base de mélange de gaussiennes («Gaussian-Mixture Probability Hypothesis Density» en anglais). Un tel module construit une distribution de densité de probabilité à l'intérieur d'une matrice d'image, à partir d'un état en cours de séquences de mise en piste et des trajectoires des plots qui résultent des images antérieures à l'image qui est en cours de traitement. Une telle distribution de densité de probabilité, qui est aussi appelée «fonction intensité» par l'Homme du métier, est construite en appliquant des critères cinématiques de déplacement des plots entre des images différentes, et mise à jour pour chaque nouvelle image qui est saisie puis traitée.

L'article "Probability-hypothesis-density filter for multitarget visual tracking with trajectory recognition", Jingjing Wu et al., 2010, décrit un suivi de cibles basé sur la "probability hypothesis density". Dans cet article, le poids associé à chaque plot, et utilisé pour sélectionner un nombre restreint de plots, dépend de caractéristiques statistiques relatives aux pistes déjà en cours.

Ainsi, des procédés de détection et de pistage de cibles sont aussi connus, qui comprennent en outre les étapes suivantes :
/3/ sélectionner certains des plots qui ont été formés à l'étape /2/, en nombre restreint par rapport à l'ensemble des plots formés à cette étape /2/, et
/4/ tester une séquence de mise en piste uniquement pour les plots sélectionnés, et déclarer une piste de cible pour une chaîne de plots sélectionnés dans des images différentes si la séquence de mise en piste est complètement satisfaite pour cette chaîne de plots.

Par rapport à ces méthodes connues, un premier but de l'invention consiste à augmenter l'efficacité du pistage par rapport à la fréquence de saisie des images, sans réduire la portée de détection.

Un second but de l'invention consiste à réduire la probabilité de fausse alarme sans réduire la probabilité de mise en piste.

Un but complémentaire de l'invention est d'atteindre ces premier et second buts sans nécessiter de quantité de mémoire et de puissance de calcul supplémentaires qui soient trop importantes.

Enfin, un autre but complémentaire de l'invention réside dans l'utilisation d'un procédé de détection et de pistage qui soit «orienté piste» («track-oriented» en anglais).

Pour atteindre ces buts ou d'autres, un premier aspect de la présente invention propose un procédé de détection et de pistage de cibles dans une série d'images optroniques d'un même champ de surveillance telle que décrite à la revendication 1, et qui comprend les étapes /1/ à /4/ effectuées pour chaque image, mais dans lequel le nombre des plots qui sont sélectionnés à l'étape /3/ est limité en fonction d'au moins une caractéristique statistique relative aux séquences de mise en piste qui sont déjà en cours de test avant que cette étape /3/ soit exécutée pour l'image en cours de traitement.

Ainsi, le nombre effectif des pistages qui sont poursuivis en parallèle à un même instant du procédé est limité, de sorte qu'une saturation de la capacité de pistage est évitée. En outre, cette limitation réduit le risque que des trajectoires de chaînes de plots différentes qui sont pistées se superposent ou se croisent. Une situation d'indétermination, aussi appelée ambigüité par l'Homme du métier, dans l'affectation des portions de trajectoires aux chaînes de plots concernées est donc évitée plus souvent.

En outre, la probabilité de fausse alarme est réduite sans qu'il soit nécessaire d'augmenter le seuil de détection des plots à l'intérieur de chaque image. La portée de la détection à l'intérieur du champ de surveillance n'est donc pas réduite. De même, ne pas augmenter le seuil de détection permet de réduire le risque qu'un plot correspondant à une chaîne déjà engagée n'apparaisse pas dans une image ultérieure, en provoquant un trou de détection, voire une interruption de pistage, alors que cette chaîne de plots en cours correspond à une cible réelle qui est restée continûment dans le champ de surveillance. La probabilité de mise en piste est donc maintenue ou améliorée par l'invention.

Un tel procédé conforme à l'invention peut être «orienté piste», car un plot qui est nouvellement détecté ne remet pas en cause une piste déjà en cours avec la trajectoire de cible potentielle qui lui est associée. Selon l'invention, le nombre des plots qui sont sélectionnés à l'étape /3/ est limité en fonction d'une valeur d'intensité intégrée Nc qui est calculée pour une distribution de densité de probabilité de présence de cible, produite pour les séquences de mise en piste qui sont déjà en cours de test avant que l'étape /3/ soit exécutée pour l'image en cours de traitement, et en fonction d'un nombre de plots Nt pour lesquels les séquences de mise en piste sont déjà en cours de test, et qui ont des poids individuels supérieurs à un seuil pondéral prédéterminé. Autrement dit, la caractéristique statistique qui est relative aux séquences de mise en piste qui sont déjà en cours de test avant que l'étape /3/ soit exécutée pour l'image en cours de traitement, et qui est utilisée pour sélectionner les plots lors de l'exécution de l'étape /3/ pour l'image en cours de traitement, comprend la valeur d'intensité intégrée Nc et le nombre de plots Nt. Ces deux composantes de la caractéristique statistique sont disponibles facilement, sans requérir de calculs supplémentaires qui soient importants.

Pour certains de ces modes préférés de mise en oeuvre de l'invention, le seuil pondéral qui est utilisé pour le poids individuel de chaque plot dont la séquence de mise en piste est en cours de test, afin de déterminer le nombre de plots Nt, peut être égal à 0,5.

De préférence, le nombre des plots qui sont sélectionnés à l'étape /3/ peut être compris entre le nombre de plots Nt et la valeur d'intensité intégrée Nc augmentée d'une marge Mf prédéterminée, ou être égal au nombre de plots Nt ou à la valeur d'intensité intégrée Nc augmentée de la marge Mf.

De façon encore plus préférée, le nombre des plots qui sont sélectionnés à l'étape /3/ peut être égal au plus petit entre le nombre de plots Nt et la valeur d'intensité intégrée Nc augmentée de la marge Mf.

Dans ceux des modes préférés de mise en oeuvre de l'invention qui utilisent la marge Mf, celle-ci peut être un nombre entier non nul qui est typiquement inférieur ou égal à cinq.

Le procédé de l'invention peut en outre comprendre les étapes suivantes :
- produire la distribution de densité de probabilité de présence de cible à partir d'un état en cours des séquences de mise en piste qui ont été initiées pour des images antérieures à l'image en cours de traitement, et à partir des trajectoires des plots qui correspondent à ces séquences de mise en piste initiées pour des images antérieures, en appliquant des critères cinématiques de déplacement des plots entre des images successives ;
- rechercher une corrélation entre la distribution de densité de probabilité de présence de cible et les plots qui ont été formés à l'étape /2/ ; puis
- mettre à jour la distribution de densité de probabilité de présence de cible en utilisant un résultat de la corrélation.

La caractéristique statistique relative aux séquences de mise en piste qui sont déjà en cours de test lorsque l'étape /3/ est exécutée pour l'image en cours de traitement, et qui est utilisée pour limiter le nombre des plots sélectionnés à cette étape /3/, peut être obtenue avantageusement à partir de la distribution de densité de probabilité de présence de cible mise à jour. Ainsi, une séquence de mise en piste qui est terminée peut être directement prise en compte pour initier une nouvelle séquence de mise en piste à partir d'un autre plot sélectionné dans l'image en cours de traitement.

Dans des mises en oeuvre particulières de l'invention, chaque plot peut posséder un profil gaussien à l'intérieur de la distribution de densité de probabilité de présence de cible.

Enfin, de façon générale, les plots qui sont sélectionnés à l'étape /3/ peuvent correspondre à des séquences de mise en piste qui sont déjà en cours de test, ou peuvent avoir des valeurs de poids qui sont supérieures aux valeurs de poids de plots non-sélectionnés, ou peuvent posséder des valeurs respectives du rapport signal-sur-bruit qui sont supérieures à un seuil de sélection, ou peuvent comprendre chacun un nombre de pixels d'image qui est supérieur à une taille minimale de plot, ou encore peuvent satisfaire des critères qui sont liés à un type supposé pour les cibles.

Un second aspect de l'invention propose un système de détection et de pistage de cibles tel que défini par la revendication 9.

Un tel système est adapté pour mettre en oeuvre un procédé conforme au premier aspect de l'invention, y compris dans ses modes préférés de mise en oeuvre qui ont été cités.

En particulier, le système peut comprendre en outre un filtre de densité de probabilité hypothétique, qui est adapté pour produire la distribution de densité de probabilité de présence de cible à partir de l'état en cours des séquences de mise en piste établi par le module de pistage, et à partir des trajectoires des plots qui correspondent à ces séquences de mise en piste, en appliquant des critères cinématiques de déplacement des plots entre des images successives, et pour rechercher la corrélation entre la distribution de densité de probabilité de présence de cible et les plots qui ont été formés par le module de traitement d'image, puis pour mettre à jour la distribution de densité de probabilité de présence de cible en utilisant un résultat de la corrélation. Dans ce cas, le filtre de densité de probabilité hypothétique peut incorporer le module de sélection plots.

En particulier, le filtre de densité de probabilité hypothétique peut être adapté pour calculer lui-même à partir de la distribution de densité de probabilité de présence de cible mise à jour, la valeur d'intensité intégrée Nc et le nombre de plots Nt pour lesquels les séquences de mise en piste sont en cours de test, et qui ont des poids individuels supérieurs au seuil pondéral.

Dans des réalisations préférées de l'invention, le filtre de densité de probabilité hypothétique peut être du type à combinaison de profils gaussiens.

D'autres particularités et avantages de la présente invention apparaîtront dans la description ci-après d'exemples de mise en oeuvre non limitatifs, en référence aux dessins annexés, dans lesquels :
- la Figure 1 montre les principaux composants d'un système de détection et de pistage de cibles qui est conforme à l'invention ; et
- la Figure 2 illustre symboliquement une distribution de densité de probabilité de présence de cible, telle que pouvant être utilisée dans un procédé conforme à l'invention.

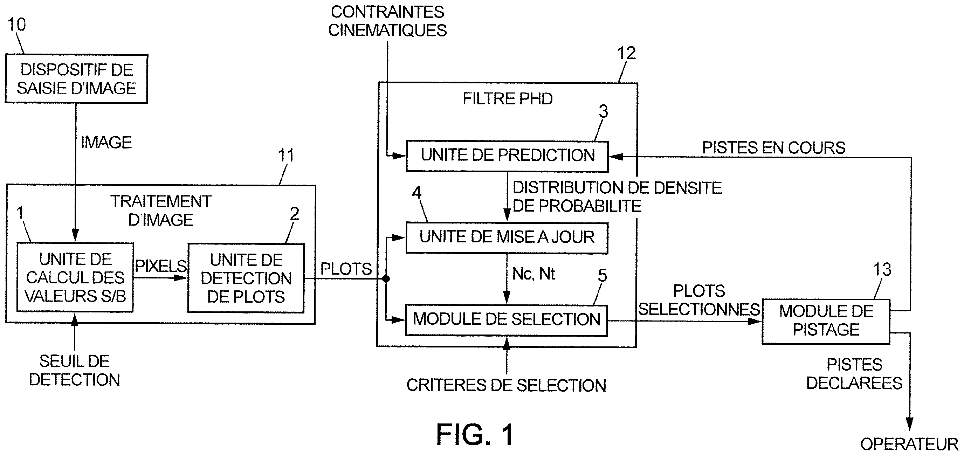

A titre d'illustration, l'invention est maintenant décrite pour un système de surveillance opérationnel dans le domaine spectral infrarouge. Dans ce cas, et en référence à la Figure 1, le système peut être du type IRST et comprendre le dispositif de saisie des images 10 avec les modules de traitement et d'analyse 11 à 13. Il peut comprendre en outre des composants supplémentaires, tels que des mémoires de stockage d'images et des contrôleurs de telles mémoires, mais l'utilisation de tels composants supplémentaires dans un système de détection et de pistage de cibles est supposée connue, et n'est pas reprise ici.

Le dispositif 10 peut être monté sur une tourelle rotative autour d'un axe vertical, et commandée pour réaliser continûment des tours de rotation à vitesse constante. De cette façon, une image peut être saisie à chaque tour de rotation, qui représente l'environnement du système limité entre une valeur minimale et une valeur maximale de hauteur en site. Chaque prise de vue pendant un tour complet constitue une nouvelle image, de sorte qu'une série d'images successives est saisie lors d'une rotation continue de la tourelle. Ainsi, la fréquence d'acquisition des images peut être comprise entre 0,1 et 1 Hz (hertz), par exemple. D'autres modes alternatifs de saisie d'images, par exemple à l'aide d'un dispositif 10 qui est immobile, peuvent être utilisés alternativement. La fréquence de saisie des images peut alors être plus élevée, notamment supérieure à 10 Hz.

Chaque image qui est saisie par le dispositif 10 est transmise à un module de traitement d'image 11. Ce module 11 a pour fonction d'extraire des plots de chaque image, indépendamment d'autres images qui ont été saisies antérieurement, et de transmettre les coordonnées et éventuellement une valeur du rapport signal-sur-bruit de chaque plot à un filtre de densité de probabilité hypothétique 12.

Couramment, le module de traitement d'image 11 comprend au moins deux unités distinctes, qui sont référencées respectivement 1 et 2. L'unité 1 est dédiée au calcul d'une valeur d'un rapport signal-sur-bruit, noté S/B, individuellement pour certains au moins des pixels qui constituent une nouvelle image saisie par le dispositif 10. De préférence, le rapport S/B est calculé pour chaque pixel d'une image saisie. Il peut être calculé d'une des façons connues de l'Homme du métier, par exemple en utilisant une évaluation globale du bruit sur l'image entière, ou en utilisant une évaluation locale du bruit d'image autour de chaque pixel, et éventuellement en retranchant un niveau de fond d'intensité d'image. Plusieurs modes d'évaluation et perfectionnements connus avant la présente invention peuvent être mis en oeuvre pour calculer le rapport S/N. L'unité 1 reçoit par ailleurs un seuil de détection, auquel est comparée la valeur du rapport S/B de chaque pixel. Le seuil de détection peut être absolu ou défini en valeur relative par rapport à une valeur maximale qui est atteinte dans l'image pour le rapport S/B. L'unité 1 transmet alors à l'unité 2 les coordonnées des pixels pour lesquels les valeurs du rapport S/B sont supérieures au seuil de détection, et éventuellement les valeurs du rapport S/B elles-mêmes.

L'unité 2 procède au regroupement des pixels transmis par l'unité 1, en fonction de leur proximité à l'intérieur de l'image. Des pixels pour lesquels la valeur du rapport S/B est supérieure au seuil de détection, et qui sont voisins ou proches les uns des autres dans l'image, sont réunis dans un plot de regroupement, désigné simplement par plot dans la suite de la présente description. Chaque plot est identifié et associé à ses coordonnées dans l'image, et éventuellement aussi à une valeur globale du rapport S/B qui est définie pour ce plot. Des algorithmes de formation de plots, pouvant être mis en oeuvre dans l'unité 2, sont aussi bien connus de l'Homme du métier, si bien qu'il n'est pas nécessaire de les décrire à nouveau ici. Optionnellement, de tels algorithmes peuvent simultanément éliminer des pixels pour lesquels les valeurs individuelles du rapport S/B sont de même supérieures au seuil de détection, mais qui sont isolés dans l'image. De tels pixels isolés peuvent aussi comprendre des petits groupes de pixels voisins aux valeurs individuelles du rapport S/B qui sont supérieures au seuil de détection, mais qui formeraient des plots de regroupement dont les valeurs globales du rapport S/B pour chacun de ces petits groupes seraient trop faibles. Le module de traitement d'image 11 transmet alors au module 12 l'identification et les coordonnées des plots, et éventuellement les valeurs du rapport S/B déterminées pour chaque plot. Chaque plot qui est transmis en sortie par le module de traitement d'image 11 peut aussi être associé à un poids qui résulte d'une combinaison d'une extension spatiale du plot dans l'image avec un contraste de ce plot. Autrement dit, le module 11 réalise un filtrage spatial du contenu de chaque image qui est saisie par le dispositif 10, et les endroits de l'image où l'intensité filtrée est plus importante forment les plots qui sont délivrés au module 12.

Le module 12 peut être du type «filtre PHD» pour «Probabilistic Hypothesis Density», et le module 13 est dédié au pistage de cibles à l'intérieur de plusieurs images qui ont été saisies successivement. Le principe du pistage peut être celui qui est déjà connu avant la présente invention, et qui a été décrit plus haut. Les modules 12 et 13 fonctionnement ensemble pour attribuer certains des plots qui sont délivrés par le module 11 pour une nouvelle image, à la poursuite de trajectoires dans la matrice des images qui résultent de plots détectés dans des images antérieures. Ces trajectoires sont donc formées de chaînes spatio-temporelles de plots qui ont été détectés dans des images différentes. Pour prolonger une chaîne déjà initiée, le module 12 comprend lui-même une unité de prédiction 3 et une unité de mise à jour 4. L'unité de prédiction 3 construit une distribution de densité de probabilité de présence de cible à partir des séquences de mise en piste qui ont été initiées ou confirmées pour des images antérieures et qui sont encore en cours de test ou de maintenance, et des coordonnées dans la matrice d'image des plots concernés par ces séquences. Cette distribution de densité de probabilité est couramment appelée fonction intensité, et attribue à chaque point du champ d'image, ou à chaque pixel de la matrice des images, une valeur de densité de probabilité pour qu'une cible soit effectivement présente à cet endroit. Pour cela, des plots qui ont été détectés dans plusieurs images sont attribués à une même trajectoire conformément à une contrainte de continuité de la trajectoire entre images successives. La trajectoire est ensuite extrapolée pour l'instant de saisie de l'image qui est en cours de traitement, c'est-à-dire la dernière image pour laquelle le module 11 a fourni les plots détectés. Cette extrapolation peut aussi prendre en compte des contraintes cinématiques liées à un type de cible qui est supposé, telles qu'une vitesse de déplacement maximale par exemple. En outre, chaque plot dans la distribution de densité de probabilité possède un poids individuel dont la valeur est d'autant plus élevée que la séquence de mise en piste est déjà suivie pour un nombre important d'images, ou que les valeurs du rapport S/B des plots de cette mise en piste dans les images successives sont élevées, ou que ces valeurs du rapport S/B présentent une évolution régulière, etc. Différentes méthodes, ou combinaisons de plusieurs méthodes, pour attribuer un poids à chaque plot dans la distribution de densité de probabilité sont aussi supposées connues.

Le module 4 est dédié à la mise à jour de la distribution de densité de probabilité telle que fournie par l'unité de prédiction 3. Pour cela, ceux des plots transmis par le module de traitement d'image 11, qui sont sensiblement superposés à des plots de la distribution de densité de probabilité, ou proches de tels plots, sont fusionnés avec ces derniers. Ainsi, la distribution de densité de probabilité est modifiée, c'est-à-dire mise à jour, pour tenir compte de l'information qui est extraite de l'image en cours de traitement. Cette mise à jour concerne la position de chaque plot dans la matrice d'image, son étalement et son poids. Des algorithmes qui sont adaptés pour réaliser une telle mise à jour sont aussi connus de l'Homme du métier et ne font pas partie de l'apport de la présente invention.

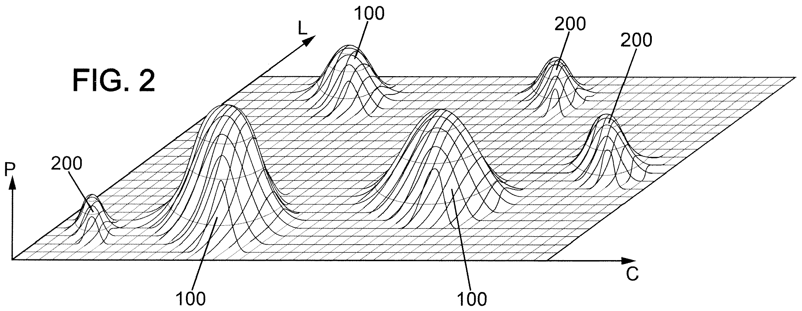

La Figure 2 représente symboliquement une distribution de densité de probabilité de présence de cible, notée P, telle que pouvant être utilisée dans l'invention. La distribution P peut avoir des valeurs pour tous les points de la matrice commune à toutes les images qui sont saisies par le dispositif 10. Elle peut être définie par une somme d'enveloppes chacune avec une amplitude, une ou deux dimensions transversales et des coordonnées d'un centre de cette enveloppe à l'intérieur de la matrice d'image. Les enveloppes peuvent avoir chacune une forme prédéterminée, par exemple une forme gaussienne. Chaque enveloppe est ajustée quant à ses paramètres pour coïncider avec un plot, et l'amplitude de l'enveloppe est déterminée par le poids du plot. Les références 100 désignent des plots dont les poids sont importants dans la distribution de densité de probabilité P, et les références 200 désignent des plots de poids plus faibles. Les coordonnées de chaque plot dans la matrice d'image sont le numéro de colonne noté C et le numéro de ligne noté L, qui correspondent au centre du plot. Dans le cas d'enveloppes gaussiennes, le filtre 12 est dit du type «GMPHD» pour «gaussian-mixture probabilistic hypothesis density».

Pour mettre en oeuvre la présente invention, des caractéristiques statistiques sont calculées à partir de la distribution de densité de probabilité, possiblement par l'unité de mise à jour 4 elle-même. De telles caractéristiques comprennent une valeur d'intensité intégrée pour la distribution de densité de probabilité. On entend par valeur d'intensité intégrée, noté Nc, une somme intégrale des valeurs individuelles de la distribution de densité de probabilité pour tous les points de la matrice d'image. Nc correspond à un nombre de cibles différentes qui sont suspectées dans le champ de surveillance, d'après l'état en cours des séquences de mise en piste.

Une autre caractéristique statistique de la distribution de densité de probabilité est le nombre des plots dans cette distribution qui possèdent un poids supérieur à un seuil pondéral prédéterminé. Un tel seuil pondéral peut être défini comme une valeur fixe, ou bien une valeur relative, telle que par exemple une fraction d'un poids de plot maximal qui est atteint dans la distribution de densité de probabilité, ou une fraction d'un poids moyen des plots qui sont présents dans la distribution. Par exemple, le seuil pondéral peut être fixé à 0,5, ou 0,4, ou encore 0,25.

L'invention a pour but de limiter le nombre des mises en piste qui sont poursuivies simultanément et en parallèle par le module de pistage 13. Autrement dit, un fonctionnement est recherché pour le module 13, qui est un compromis entre la capacité de traitement de ce module et la complexité de la distribution de densité de probabilité pour la série d'images qui est analysée. On entend par capacité de traitement du module 13 le nombre de mises en piste qui peuvent être suivies en parallèle pour une durée déterminée d'analyse de chaque image. Pour cela, le filtre 12 réalise une sélection parmi les plots qui sont transmis par le module de traitement d'image 11 pour l'image qui est en cours de traitement. Cette sélection peut être réalisée par un module dédié, référencé 5. La sélection des plots est limitée par le nombre des plots qui seront effectivement transmis au module de pistage 13. Les plots non transmis peuvent être abandonnés définitivement, ou mémorisés temporairement. Dans un mode préféré de mise en oeuvre de l'invention, mais qui n'est pas limitatif, ce nombre des plots qui sont transmis au module de pistage 13 peut être égal à la plus petite des deux valeurs suivantes :
la valeur d'intensité intégrée Nc de la fonction de densité de probabilité, augmentée d'une marge Mf : Nc + Mf, et
le nombre Nt des plots qui ont des poids individuels supérieurs au seuil pondéral prédéterminé, dans la fonction de densité de probabilité mise à jour.

Par exemple, la marge Mf peut être un entier non nul inférieur ou égal à dix, de préférence inférieur ou égal à cinq, par exemple égal à deux ou trois. La valeur qui est choisie pour la marge Mf contrôle le nombre moyen de nouvelles séquences de mise en piste qui peuvent être initiées à chaque nouvelle image qui est analysée, ou la fréquence moyenne selon laquelle de telles nouvelles séquences de mise en piste sont initiées, par rapport au nombre d'images analysées.

Ainsi, pour une distribution de densité de probabilité peu complexe, qui comporte peu de plots mais ceux-ci étant chacun importants, le nombre des plots de l'image en cours de traitement qui sont sélectionnés pour être transmis au module de pistage 13 est Nt. Ces plots sélectionnés de l'image en cours de traitement peuvent comprendre certains de ceux qui coïncident avec les plots de la fonction de densité de probabilité mise à jour, mais pas nécessairement tous. De nouveaux plots peuvent ainsi être sélectionnés, selon le nombre de trous de détection qui sont introduits dans les séquences de mise en piste en cours de test, ou le nombre de telles séquences qui se terminent éventuellement. Une nouvelle séquence de mise en piste est alors initiée pour chacun de ces nouveaux plots. Ce cas de distribution de densité de probabilité peu complexe est le plus fréquent dans la pratique.

Lorsque la distribution de densité de probabilité devient plus complexe, elle comporte des plots significatifs, c'est-à-dire dont les poids individuels sont supérieurs chacun au seuil pondéral prédéterminé, en plus grand nombre. Le nombre de plots qui sont sélectionnés par le module 5 pour être transmis au module de pistage 13 augmente alors, jusqu'à être limité à Nc+Mf. Une surcharge est ainsi évitée pour le fonctionnement du module de pistage 13. Dans ce cas encore, certains des plots qui sont sélectionnés peuvent ne correspondre à aucune des séquences de mise en piste qui sont déjà en cours de test.

Les plots qui sont transmis par le module 5 au module 13, en nombre qui est limité de la façon qui vient d'être décrite, peuvent être sélectionnés de plusieurs façons, en fonction de critères qui sont utilisés pour cette sélection. Une priorité n'est pas nécessairement accordée aux plots pour lesquels des séquences de mise en piste sont déjà en cours de test. Des critères possibles pour sélectionner les plots qui sont transmis à l'unité de pistage 13 peuvent être : les plots sont sélectionnés selon un ordre décroissant de leurs valeurs respectives de poids, ou ceux des plots dont la valeur du rapport S/N est supérieure à un seuil de sélection prédéterminé, ou ceux des plots qui satisfont un ou plusieurs critères liés à un type supposé pour les cibles. Utiliser une combinaison de plusieurs de ces critères au sein du module 5 pour sélectionner les plots qui sont transmis au module de pistage 13 est possible et peut être avantageux. Des critères qui sont liés au type des cibles peuvent concerner la morphologie des cibles, leurs vitesses apparentes de déplacement, etc.

La sélection des plots qui est ainsi réalisée par le module 5 produit une réduction du fouillis présent dans l'image traitée. Le module de pistage 13 poursuit alors les séquences de mise en piste qui sont déjà en cours, et initie éventuellement de nouvelles séquences de mise en piste, uniquement pour ceux des plots qui ont été sélectionnés. Le test et la mise à jour de chaque séquence par le module 13 sont connus en soi et ne sont pas modifiés par la présente invention. Les pistes déclarées peuvent alors être soumises à un opérateur de surveillance, qui valide ou non la détection d'une cible réelle.

Le tableau suivant compare des performances de surveillance obtenues avec un système de détection et de pistage de cibles qui est dépourvu du module de sélection 5, et un autre système qui incorpore un tel module de sélection 5 utilisé selon l'invention. Deux valeurs pour le seuil de détection, respectivement indiquées par seuil moyen et seuil bas, sont en outre utilisées pour le système dépourvu de module de sélection, alors que le système selon l'invention est mis en oeuvre avec le seuil bas. La même scène d'apparition d'un avion dans le champ de surveillance, à partir d'un bord du champ de surveillance, puis d'éloignement de l'avion dans un ciel nuageux tout en restant à l'intérieur du champ de surveillance, est utilisée pour les trois expériences.

| | Sans module de sélection - Seuil moyen | Sans module de sélection - Seuil bas | Avec module de sélection - Seuil bas |
|---|---|---|---|
| Détections positives de l'avion | Images 794 à 1285 puis 1385 à 1415 | Images 794 à 1068 puis 1310 à 1461 | Images 794 à 1461 |
| Nombre de fausses pistes par image | | Moyenne = 1,81 | Moyenne = 0,497 |
| | | Ecart-type = 2,07 | Ecart-type = 0,696 |
| Nombre de fausses pistes créées par image | | Moyenne = 0,046 | Moyenne = 0,013 |
| | | Ecart-type = 0,225 | Ecart-type = 0,117 |
| Nombre de fausses pistes pour nuages par image | Moyenne = 0,212 | | Moyenne = 0,995 |
| | Ecart-type = 0,409 | | Ecart-type = 0,136 |
| Nombre de fausses pistes pour nuages créées par image | Moyenne = 0,009 | | Moyenne = 0,005 |
| | Ecart-type = 0,096 | | Ecart-type = 0,073 |

Le nombre de fausses pistes est donc fortement réduit par l'utilisation du module de sélection 5 conformément à l'invention. En outre, le fait que la poursuite de l'avion continue jusqu'à l'image 1461 pour les deux dernières colonnes du tableau, au lieu de s'arrêter à l'image 1415, montre que le pistage de l'avion est conservé et continu. Par ailleurs, les détections positives de l'avion montrent que la réduction du seuil de détection n'a pas introduit de détections erronées.

Par ailleurs, pour les bords de nuages, les nuages sont détectés et pistés à 99,5% du temps de surveillance lorsque le module de sélection 5 est utilisé selon l'invention, alors qu'ils ne sont détectés et pistés qu'à 21,2% du temps de surveillance pour le seuil moyen de détection sans utiliser le module de sélection 5. L'augmentation du nombre d'images dans lesquelles les bords de nuages sont détectés et pistés, procure à l'opérateur un temps qui est suffisant pour identifier plus facilement les cibles concernées comme étant les bords des nuages. De plus, étant stables dans le temps, une fois identifiées, ces cibles ne sont plus perturbatrices pour l'opérateur.

Grâce à l'utilisation selon l'invention du module de sélection 5, il a donc été possible d'abaisser le seuil de détection, c'est-à-dire d'augmenter la sensibilité de détection d'une cible potentielle à l'intérieur de chaque image saisie, sans réduire la probabilité de mise en piste. Plus précisément, abaisser le seuil de détection permet de poursuivre plus longtemps une cible telle que l'avion dans l'exemple précédent. Cela permet aussi de supprimer certaines fausses pistes tout en ayant une continuité améliorée pour la détection d'une cible réelle dans les images successives.

Il est entendu que l'invention peut être reproduite en introduisant des modifications par rapport à la mise en oeuvre qui a été décrite en détail ci-dessus. En particulier, une autre combinaison que le choix du plus petit entre le nombre Nt et la somme de Nc avec la marge Mf, peut être appliquée pour limiter le nombre des plots qui sont sélectionnés afin d'être transmis au module de pistage.

## Revendications

1. Procédé de détection et de pistage de cibles dans une série d'images optroniques d'un même champ de surveillance, comprenant les étapes suivantes effectuées pour chaque image en cours de traitement :
/1/ en utilisant un seuil de détection, rechercher des pixels à l'intérieur de l'image, qui possèdent chacun une valeur d'un rapport signal-sur-bruit supérieure au seuil de détection ;
/2/ à l'intérieur d'une matrice de l'image, regrouper certains des pixels dont les valeurs du rapport signal-sur-bruit sont supérieures au seuil de détection, lorsque lesdits pixels sont proches les uns des autres dans l'image, de façon à former des plots de regroupement ;
/3/ sélectionner certains des plots formés à l'étape /2/, en nombre restreint par rapport à l'ensemble des plots formés à ladite étape /2/, et
/4/ tester une séquence de mise en piste uniquement pour les plots sélectionnés, et déclarer une piste de cible pour une chaîne de plots sélectionnés dans des images différentes si la séquence de mise en piste est complètement satisfaite pour ladite chaîne de plots ;
le procédé étant **caractérisé en ce que** le nombre des plots sélectionnés à l'étape /3/ est limité en fonction d'une valeur d'intensité intégrée Nc calculée pour une distribution de densité de probabilité de présence de cible, produite pour les séquences de mise en piste qui sont déjà en cours de test avant que l'étape /3/ soit exécutée pour l'image en cours de traitement, et en fonction d'un nombre de plots Nt de ladite distribution qui ont des poids individuels supérieurs à un seuil pondéral prédéterminé,
la valeur d'intensité intégrée étant une somme intégrale des valeurs individuelles de la distribution de densité de probabilité pour tous les points de la matrice d'image, et
le poids individuel de chaque plot résultant d'une combinaison d'une extension spatiale du plot dans l'image avec un contraste de ce plot.

2. Procédé selon la revendication 1, suivant lequel le seuil pondéral qui est utilisé pour le poids individuel de chaque plot dont la séquence de mise en piste est en cours de test, afin de déterminer le nombre de plots Nt, est égal à 0,5.

3. Procédé selon la revendication 1 ou 2, suivant lequel le nombre des plots qui sont sélectionnés à l'étape /3/ est compris entre le nombre de plots Nt et la valeur d'intensité intégrée Nc augmentée d'une marge Mf prédéterminée, ou égal audit nombre de plots Nt ou à ladite valeur d'intensité intégrée Nc augmentée de la marge Mf.

4. Procédé selon la revendication 3, suivant lequel le nombre des plots qui sont sélectionnés à l'étape /3/ est égal au plus petit entre le nombre de plots Nt et la valeur d'intensité intégrée Nc augmentée de la marge Mf.

5. Procédé selon la revendication 3 ou 4, suivant lequel la marge Mf est un nombre entier non nul inférieur ou égal à cinq.

6. Procédé selon l'une quelconque des revendications 1 à 5, comprenant en outre les étapes suivantes :
- produire la distribution de densité de probabilité de présence de cible à partir d'un état en cours des séquences de mise en piste initiées pour des images antérieures à l'image en cours de traitement, et à partir de trajectoires des plots correspondant aux dites séquences de mise en piste initiées pour des images antérieures, en appliquant des critères cinématiques de déplacement des plots entre des images successives ;
- rechercher une corrélation entre la distribution de densité de probabilité de présence de cible et les plots qui ont été formés à l'étape /2/ ; puis
- mettre à jour la distribution de densité de probabilité de présence de cible en utilisant un résultat de la corrélation,
et suivant lequel la caractéristique statistique relative aux séquences de mise en piste qui sont déjà en cours de test lorsque l'étape /3/ est exécutée pour l'image en cours de traitement, et qui est utilisée pour limiter le nombre des plots sélectionnés à ladite étape /3/, est obtenue à partir de la distribution de densité de probabilité de présence de cible mise à jour.

7. Procédé selon l'une quelconque des revendications 1 à 6, suivant lequel chaque plot possède un profil gaussien à l'intérieur de la distribution de densité de probabilité de présence de cible.

8. Procédé selon l'une quelconque des revendications précédentes, suivant lequel les plots qui sont sélectionnés à l'étape /3/ correspondent à des séquences de mise en piste déjà en cours de test, ou ont des valeurs de poids supérieures à des valeurs de poids de plots non-sélectionnés, ou ont des valeurs respectives du rapport signal-sur-bruit supérieures à un seuil de sélection, ou comprennent chacun un nombre de pixels d'image qui est supérieur à une taille minimale de plot, ou satisfont des critères liés à un type supposé pour les cibles.

9. Système de détection et de pistage de cibles comprenant les composants suivants :
- un dispositif de saisie d'images optroniques (10) ;
- un module de traitement d'image (11), adapté pour calculer des valeurs respectives d'un rapport signal-sur-bruit pour des pixels de chaque image saisie, pour regrouper certains des pixels dont les valeurs du rapport signal-sur-bruit sont supérieures à un seuil de détection, lorsque lesdits pixels sont proches les uns des autres dans l'image saisie, de façon à former des plots de regroupement ;
- un module de pistage (13), adapté pour tester une séquence de mise en piste pour certains au moins des plots en utilisant une chaîne de plots détectés dans des images différentes, et déclarer une piste de cible pour la chaîne des plots si la séquence de mise en piste est satisfaite pour cette chaîne de plots ; et
- un module de sélection de plots (5), agencé pour recevoir en entrée, pour chaque image saisie, les plots formés par le module de traitement d'image (11), et pour délivrer en sortie certains des plots reçus en entrée, et agencé de sorte que le module de pistage (13) ne teste la séquence de mise en piste uniquement que pour ceux des plots qui sont délivrés en sortie par ledit module de sélection (5),
le système étant **caractérisé en ce que** le module de sélection (5) est adapté pour sélectionner les plots qui sont délivrés en sortie en limitant un nombre desdits plots délivrés en sortie en fonction d'une valeur d'intensité intégrée Nc calculée pour une distribution de densité de probabilité de présence de cible, produite pour des séquences de mise en piste qui sont déjà en cours de test avant que la sélection soit exécutée pour une image en cours de traitement, et en fonction d'un nombre de plots Nt de ladite distribution qui ont des poids individuels supérieurs à un seuil pondéral prédéterminé,
la valeur d'intensité intégrée étant une somme intégrale des valeurs individuelles de la distribution de densité de probabilité pour tous les points de la matrice d'image, et
le poids individuel de chaque plot résultant d'une combinaison d'une extension spatiale du plot dans l'image avec un contraste de ce plot.

10. Système selon la revendication 9, adapté pour mettre en oeuvre un procédé selon l'une quelconque des revendications 2 à 5.

11. Système selon la revendication 10, comprenant en outre :
- un filtre de densité de probabilité hypothétique (12), adapté pour produire la distribution de densité de probabilité de présence de cible à partir d'un état en cours des séquences de mise en piste établi par le module de pistage (13), et à partir de trajectoires de plots correspondant aux dites séquences de mise en piste, en appliquant des critères cinématiques de déplacement des plots entre des images successives, et pour rechercher une corrélation entre la distribution de densité de probabilité de présence de cible et les plots qui ont été formés par le module de traitement d'image (11), puis pour mettre à jour la distribution de densité de probabilité de présence de cible en utilisant un résultat de la corrélation ; et
le filtre de densité de probabilité hypothétique (12) incorporant le module de sélection plots (5).

12. Système selon la revendication 11, dans lequel le filtre de densité de probabilité hypothétique (12) est adapté pour calculer à partir de la distribution de densité de probabilité de présence de cible mise à jour, la valeur d'intensité intégrée Nc et le nombre de plots Nt pour lesquels les séquences de mise en piste sont en cours de test, et qui ont des poids individuels supérieurs au seuil pondéral.

13. Système selon la revendication 11 ou 12, dans lequel le filtre de densité de probabilité hypothétique (12) est de type à combinaison de profils gaussiens.

## Patentansprüche

1. Verfahren zur Detektion und Verfolgung von Zielen in einer Reihe von optronischen Bildern des gleichen Überwachungsfelds, umfassend die folgenden Schritte, die für jedes in Bearbeitung befindliche Bild durchgeführt werden:
/1/ unter Verwendung eines Detektionsschwellenwerts Suchen nach Pixeln innerhalb des Bilds, die jeweils einen Signal/Rausch-Verhältniswert aufweisen, der über dem Detektionsschwellenwert liegt;
/2/ innerhalb einer Matrix des Bilds Gruppieren von einigen der Pixel, deren Signal/Rausch-Verhältniswerte über dem Detektionsschwellenwert liegen, wenn die Pixel in dem Bild nahe beieinanderliegen, so dass gruppierte Blöcke gebildet werden;
/3/ Auswählen von einigen der im Schritt /2/ gebildeten Blöcke in einer Anzahl, die geringer ist als jene der Gesamtheit der im Schritt /2/ gebildeten Blöcke, und
/4/ Testen einer Verfolgungssequenz einzig für die ausgewählten Blöcke, und Deklarieren einer Zielverfolgung für eine Kette von Blöcken, die in unterschiedlichen Bildern ausgewählt wurden, wenn die Verfolgungssequenz für die Kette von Blöcken vollständig erfüllt ist;
wobei das Verfahren **dadurch gekennzeichnet ist, dass** die Anzahl der im Schritt /3/ ausgewählten Blöcke begrenzt wird in Abhängigkeit von einem integrierten Intensitätswert Nc, der für eine Verteilung der Wahrscheinlichkeitsdichte des Vorhandenseins eines Ziels berechnet wird, die für die Verfolgungssequenzen erzeugt wird, die sich bereits in Testung befinden, bevor der Schritt /3/ für das in Bearbeitung befindliche Bild ausgeführt wird, und in Abhängigkeit von einer Anzahl an Blöcken Nt der Verteilung, die individuelle Gewichte aufweisen, die über einem vorbestimmten Gewichtsschwellenwert liegen,
wobei der integrierte Intensitätswert eine integrale Summe der individuellen Werte der Wahrscheinlichkeitsdichteverteilung für alle Punkte der Bildmatrix ist, und
wobei das individuelle Gewicht jedes Blocks aus einer Kombination einer räumlichen Erweiterung des Blocks in dem Bild mit einem Kontrast dieses Blocks resultiert.

2. Verfahren nach Anspruch 1, wobei der Gewichtsschwellenwert, der für das individuelle Gewicht jedes Blocks verwendet wird, dessen Verfolgungssequenz sich in Testung befindet, um die Anzahl der Blöcke Nt zu bestimmen, gleich 0,5 ist.

3. Verfahren nach Anspruch 1 oder 2, wobei die Anzahl der Blöcke, die im Schritt /3/ ausgewählt werden, zwischen der Anzahl an Blöcken Nt und dem integrierten Intensitätswert Nc, erhöht um eine vorbestimmte Spanne Mf, liegt, oder gleich der Anzahl an Blöcken Nt oder dem integrierten Intensitätswert Nc, erhöht um die Spanne Mf, ist.

4. Verfahren nach Anspruch 3, wobei die Anzahl der Blöcke, die im Schritt /3/ ausgewählt werden, gleich dem Kleinsten unter der Anzahl an Blöcken Nt und dem integrierten Intensitätswert Nc, erhöht um die Spanne Mf, ist.

5. Verfahren nach Anspruch 3 oder 4, wobei die Spanne Mf eine ganze Zahl von nicht null kleiner oder gleich fünf ist.

6. Verfahren nach einem der Ansprüche 1 bis 5, ferner umfassend die folgenden Schritte:
- Erzeugen der Verteilung der Wahrscheinlichkeitsdichte des Vorhandenseins eines Ziels ausgehend von einem aktuellen Zustand der Verfolgungssequenzen, die für Bilder initiiert wurden, die dem in Bearbeitung befindlichen Bild vorangehen, und ausgehend von Verläufen der Blöcke, die den Verfolgungssequenzen entsprechen, die für die vorangehenden Bilder initiiert wurden, indem kinematische Kriterien für die Bewegung der Blöcke zwischen aufeinanderfolgenden Bildern angewendet werden;
- Suchen nach einer Korrelation zwischen der Verteilung der Wahrscheinlichkeitsdichte des Vorhandenseins eines Ziels und den Blöcken, die im Schritt /2/ gebildet wurden; anschließend
- Aktualisieren der Verteilung der Wahrscheinlichkeitsdichte des Vorhandenseins eines Ziels, indem ein Ergebnis der Korrelation verwendet wird,
und wobei das statistische Merkmal, das sich auf die Verfolgungssequenzen bezieht, die sich bereits in Testung befinden, wenn der Schritt /3/ für das in Bearbeitung befindliche Bild ausgeführt wird, und das verwendet wird, um die Anzahl der im Schritt /3/ ausgewählten Blöcke zu begrenzen, ausgehend von der aktualisierten Verteilung der Wahrscheinlichkeitsdichte des Vorhandenseins eines Ziels erhalten wird.

7. Verfahren nach einem der Ansprüche 1 bis 6, wobei jeder Block ein Gauß-Profil innerhalb der Verteilung der Wahrscheinlichkeitsdichte des Vorhandenseins eines Ziels aufweist.

8. Verfahren nach einem der vorhergehenden Ansprüche, wobei die im Schritt /3/ ausgewählten Blöcke Verfolgungssequenzen entsprechen, die sich bereits in Testung befinden, oder Gewichtswerte aufweisen, die über den Gewichtswerten von nicht ausgewählten Blöcken liegen, oder jeweilige Signal/Rausch-Verhältniswerte aufweisen, die über einem Auswahlschwellenwert liegen, oder jeweils eine Anzahl an Bildpixeln umfassen, die über einer Mindestgröße eines Blocks liegt, oder Kriterien erfüllen, die mit einem für die Ziele angenommenen Typ verbunden sind.

9. System zur Detektion und Verfolgung von Zielen, umfassend die folgenden Komponenten:
- eine Vorrichtung zur Erfassung von optronischen Bildern (10);
- ein Bildverarbeitungsmodul (11), das dafür geeignet ist, jeweilige Werte eines Signal/Rausch-Verhältnisses für die Pixel jedes erfassten Bilds zu berechnen, einige der Pixel zu gruppieren, deren Signal/Rausch-Verhältniswerte über einem Detektionsschwellenwert liegen, wenn die Pixel in dem erfassten Bild nahe beieinanderliegen, so dass gruppierte Blöcke gebildet werden;
- ein Verfolgungsmodul (13), das dafür geeignet ist, eine Verfolgungssequenz für wenigstens einige der Blöcke zu testen, indem eine Kette von Blöcken verwendet wird, die in den verschiedenen Bildern detektiert werden, und eine Zielverfolgung für die Kette von Blöcken zu deklarieren, wenn die Verfolgungssequenz für diese Kette von Blöcken erfüllt ist; und
- ein Blockauswahlmodul (5), das dafür eingerichtet ist, am Eingang für jedes erfasste Bild die Blöcke zu empfangen, die durch das Bildverarbeitungsmodul (11) gebildet wurden, und am Ausgang einige der am Eingang empfangenen Blöcke auszugeben, und das derart eingerichtet ist, dass das Verfolgungsmodul (13) die Verfolgungssequenz einzig für jene Blöcke testet, die am Ausgang durch das Auswahlmodul (5) ausgegeben werden,
wobei das System **dadurch gekennzeichnet ist, dass** das Auswahlmodul (5) dafür geeignet ist, die Blöcke auszuwählen, die am Ausgang ausgegeben werden, indem eine Anzahl der am Ausgang ausgegebenen Blöcke in Abhängigkeit von einem integrierten Intensitätswert Nc begrenzt wird, der für eine Verteilung der Wahrscheinlichkeitsdichte des Vorhandenseins eines Ziels berechnet wird, die für die Verfolgungssequenzen erzeugt wird, die sich bereits in Testung befinden, bevor die Auswahl für ein in Bearbeitung befindliches Bild durchgeführt wird, und in Abhängigkeit von einer Anzahl an Blöcken Nt der Verteilung, die individuelle Gewichte aufweisen, die über einem vorbestimmten Gewichtsschwellenwert liegen,
wobei der integrierte Intensitätswert eine integrale Summe der individuellen Werte der Wahrscheinlichkeitsdichteverteilung für alle Punkte der Bildmatrix ist, und
wobei das individuelle Gewicht jedes Blocks aus einer Kombination einer räumlichen Erweiterung des Blocks in dem Bild mit einem Kontrast dieses Blocks resultiert.

10. System nach Anspruch 9, das dafür geeignet ist, ein Verfahren nach einem der Ansprüche 2 bis 5 auszuführen.

11. System nach Anspruch 10, ferner umfassend:
- einen Filter für die hypothetische Wahrscheinlichkeitsdichte (12), der dafür geeignet ist, die Verteilung der Wahrscheinlichkeitsdichte des Vorhandenseins eines Ziels ausgehend von einem aktuellen Zustand der Verfolgungssequenzen, der durch das Verfolgungsmodul (13) erstellt wurde, und ausgehend von Verläufen der Blöcke, die den Verfolgungssequenzen entsprechen, zu erzeugen, indem kinematische Kriterien für die Bewegung der Blöcke zwischen aufeinanderfolgenden Bildern angewendet werden, und dafür, nach einer Korrelation zwischen der Verteilung der Wahrscheinlichkeitsdichte des Vorhandenseins eines Ziels und den Blöcken zu suchen, die durch das Bildverarbeitungsmodul (11) gebildet wurden, und anschließend dafür, die Verteilung der Wahrscheinlichkeitsdichte des Vorhandenseins eines Ziels zu aktualisieren, indem ein Ergebnis der Korrelation verwendet wird; und
wobei der Filter für die hypothetische Wahrscheinlichkeitsdichte (12) das Blockauswahlmodul (5) beinhaltet.

12. System nach Anspruch 11, wobei der Filter für die hypothetische Wahrscheinlichkeitsdichte (12) dafür geeignet ist, ausgehend von der aktualisierten Verteilung der Wahrscheinlichkeitsdichte des Vorhandenseins eines Ziels den integrierten Intensitätswert Nc und die Anzahl an Blöcken Nt zu berechnen, für die sich die Verfolgungssequenzen in Testung befinden und die individuelle Gewichte aufweisen, die über dem Gewichtsschwellenwert liegen.

13. System nach Anspruch 11 oder 12, wobei der Filter für die hypothetische Wahrscheinlichkeitsdichte (12) vom Typ mit Kombination von Gauss-Profilen ist.

## Claims

1. Method for detecting and tracking targets in a series of optronic images of one and same monotoring field, comprising the following steps carried out for each image being processed:
/1/ using a detection threshold, looking for pixels inside the image, which each have a value of a signal-to-noise ratio greater than the detection threshold;
/2/ inside a matrix of the image, grouping together some of the pixels of which the values of the signal-to-noise ratio are greater than the detection threshold, when said pixels are close to one another in the image, so as to form grouping plots;
/3/ selecting some of the plots formed in step /2/, in a limited number with respect to all the plots formed in step /2/, and
/4/ testing a tracking sequence only for the selected plots, and stating a target track for a chain of plots selected in the different images if the tracking sequence is completely satisfied for said chain of plots;
the method being **characterised in that** the number of plots selected in step /3/ is limited based on an integrated intensity value Nc calculated for a target presence probability density distribution produced for the tracking sequences which are already undergoing testing before step /3/ is executed for the image currently processed, and based on a number of plots Nt of said distribution which have individual weights greater than a predetermined weight threshold,
the integrated intensity value being an integral sum of the individual values of probability density distribution for all points of the image matrix, and
the individual weight of each plot resulting from a combination of a spatial extension of the plot in the image with a contrast of this plot.

2. Method according to claim 1, according wherein weight threshold which is used for the individual weight of each plot of which the tracking sequence is undergoing testing, in order to determine the number of plots Nt, is equal to 0.5.

3. Method according to claim 1 or 2, wherein the number of plots which are selected in step /3/ is between the number of plots Nt and the integrated intensity value Nc increased by a predetermined margin Mf, or equal to said number of plots Nt or to said integrated intensity value Nc increased by the margin Mf.

4. Method according to claim 3, wherein the number of plots which are selected in step /3/ is equal to the smallest one among the number of plots Nt and the integrated intensity value Nc increased by the margin Mf.

5. Method according to claim 3 or 4, wherein the margin Mf is a non-zero integer lower than or equal to 5.

6. Method according to any one of claims 1 to 5, further comprising the following steps:
- producing the target presence probability density distribution from a current state of the tracking sequences initiated for images prior to the image being processed, and from trajectories of plots corresponding to said tracking sequences initiated for prior images, by applying criteria for kinetic movements of plots between successive images;
- looking for a correlation between the target presence probability density distribution and the plots which have been formed in step /2/; then
- updating the target presence probability density distribution by using a result of the correlation,
and wherein the statistical characteristic relating to the tracking sequences which are already undergoing testing when step /3/ is executed for the image being processed, and which is used to limit the number of plots selected in step /3/, is obtained from the updated target presence probability density distribution.

7. Method according to any one of claims 1 to 6, wherein each plot has a Gaussian profile inside the target presence probability density distribution.

8. Method according to any one of the preceding claims, wherein the plots which are selected in step /3/ correspond to tracking sequences already undergoing testing, or have weight values greater than weight values of non-selected plots, or have respective signal-to-noise ratio values greater than a selection threshold, or each comprise a number of image pixels which is greater than a minimum plot size, or satisfy criteria related to a supposed type for the targets.

9. System for detecting and tracking targets comprising the following components:
- a device for capturing optronic images (10);
- an image processing module (11), adapted to calculate respective values of a signal-to-noise ratio for pixels of each image captured, to group together some of the pixels of which the signal-to-noise ratio values are greater than a detection threshold, when said pixels are close to one another in the image captured, so as to form grouping plots;
- a tracking module (13), adapted to test a tracking sequence for at least some of the plots by using a chain of plots detected in different images, and to state a target track for the chain of plots if the tracking sequence is satisfied for this chain of plots; and
- a plot selection module (5), arranged to receive at input, for each image captured, the plots formed by the image processing module (11), and to output some of the plots received at input, and arranged so that the tracking module (13) only tests the tracking sequence for those of the plots which are outputted by said selection module (5),
the system being **characterised in that** the selection module (5) is adapted to selected the plots which are outputted by limiting a number of said plots outputted based on an integrated intensity value Nc calculated for a target presence probability density distribution, produced for tracking sequences which are already undergoing testing before the selection is executed for an image being processed, and based on a number of plots Nt of said distribution which have individual weights greater than a predetermined weight threshold,
the integrated intensity value being an integral sum of the individual values of the probability density distribution for all points of the image matrix, and
the individual weight of each plot resulting from a combination of a spatial extension of the plot in the image with a contrast of this plot.

10. System according to claim 9, adapted to implement a method according to any one of claims 2 to 5.

11. System according to claim 10, further comprising:
- a theoretical probability density filter (12), adapted to produce the target presence probability density distribution from an ongoing state of the tracking sequences established by the tracking module (13), and from trajectories of plots corresponding to said tracking sequences, by applying criteria for kinetic movements of plots between successive images, and to look for a correlation between the target presence probability density distribution and the plots which have been formed by the image processing module (11), then to update the target presence probability density distribution by using a result of the correlation; and
the theoretical probability density filter (12) incorporating the plot selection module (5).

12. System according to claim 11, wherein the theoretical probability density filter (12) is adapted to calculate, from the updated target presence probability density distribution, the integrated intensity value Nc and the number of plots Nt for which the tracking sequences are undergoing testing, and which have individual weights greater than the weight threshold.

13. System according to claim 11 or 12, wherein the theoretical probability density filter (12) is a Gaussian profile combination type.
